# FASCICULE DE BREVET EUROPEEN

(11) **EP 2 699 385 B1**
(45) Date de publication et mention de la délivrance du brevet: **28.01.2015**
(21) Numéro de dépôt: 12710771.2
(22) Date de dépôt: 08.03.2012
(51) Int. Cl.: B24B 13/005, B24B 9/14, G02C 13/00

(54) **SUPPORT DE LENTILLE OPHTALMIQUE**
HALTER FÜR BRILLENGLÄSER
OPHTHALMIC-LENS HOLDER

(30) Priorité: 21.04.2011 FR 1101266
(43) Date de publication de la demande: 26.02.2014
(73) Titulaire: Essilor International (Compagnie Générale d'Optique), 94220 Charenton-le-Pont (FR)
(72) Inventeur: BRECHEMIER, Bernard, F-94220 Charenton le Pont (FR); BOUTINON, Stéphane, F-94220 Charenton le Pont (FR); TANG, David, F-94220 Charenton le Pont (FR)
(74) Mandataire: Chauvin, Vincent
(86) Numéro de dépôt international: PCT/FR2012/000082
(87) Numéro de publication internationale: WO 2012/143621

(56) Documents cités:
- DE-U1- 8 709 003
- FR-A1- 2 861 005

## Description

### DOMAINE TECHNIQUE AUQUEL SE RAPPORTE L'INVENTION

La présente invention concerne de manière générale le domaine de la lunetterie.

Elle concerne plus particulièrement un support de lentille ophtalmique, comportant un plateau et trois plots qui s'élèvent à partir du plateau, qui présentent des extrémités libres par lesquelles ils sont adaptés à porter la lentille ophtalmique et dont l'un au moins d'entre eux est monté mobile en rotation sur le plateau autour d'un axe de rotation.

### ARRIERE-PLAN TECHNOLOGIQUE

La partie technique du métier de l'opticien, qui consiste à monter une paire de lentilles ophtalmiques sur une monture de lunettes sélectionnée par un client, se décompose en quatre opérations principales :
- l'acquisition des formes des contours des entourages de la monture de lunettes sélectionnée par le client,
- le centrage de chaque lentille ophtalmique dans un appareil centreur-bloqueur, qui consiste à déterminer le référentiel de la lentille à l'aide de marques de centrage prévues sur celles-ci, puis à positionner convenablement le contour de l'entourage précédemment acquis dans le référentiel de la lentille de manière qu'une fois détourée suivant ce contour puis montée dans sa monture, la lentille soit correctement positionnée par rapport à l'oeil correspondant du client afin qu'elle exerce au mieux la fonction optique pour laquelle elle a été conçue,
- le blocage de chaque lentille, qui consiste à fixer un organe de blocage sur la lentille, de manière que la lentille puisse être extraite de l'appareil centreur-bloqueur sans perte de référentiel, puis
- le détourage de chaque lentille qui consiste à usiner cette lentille suivant le contour préalablement centré.

Lors des opérations de centrage et de blocage, il est nécessaire de maintenir la lentille en position fixe.

On connaît pour cela un support tel que précité, dont le plateau est transparent pour permettre de centrer la lentille à l'aide à l'aide d'un appareil centreur-bloqueur classique, et dont les plots forment ensemble un trépied sur lequel la lentille repose par sa face arrière.

Ce support comporte en particulier un socle métallique en forme d'étoile à trois bras qui est fixé au centre du plateau transparent et qui porte à chacune de ses extrémités l'un des trois plots, de manière que les trois plots sont espacés deux à deux de 35 millimètres.

Ce support de lentille ne s'avère toutefois pas entièrement satisfaisant tant pour le centrage de la lentille que pour son maintien en position fixe.

En effet, lors du centrage de la lentille, le socle en étoile cache une partie de la lentille. Il se peut alors qu'il occulte les marques de centrage de la lentille, au risque que l'appareil centreur-bloqueur ne puisse plus centrer la lentille.

Par ailleurs, si dans la majorité des cas, le trépied assure un bon maintien de la lentille en position fixe, il arrive qu'il ne puisse pas remplir cette fonction correctement.

Il en est par exemple ainsi lorsque la lentille a déjà été détourée une première fois, et qu'elle nécessite d'être centrée et usinée une seconde fois pour parfaitement s'adapter à la forme de l'entourage de la monture de lunettes sélectionnée. Il arrive en effet alors que la lentille déjà taillée présente une taille réduite qui ne lui permette pas de reposer simultanément sur les trois plots.

Il en est également ainsi lorsque la lentille présente une très forte cambrure et un grand diamètre, puisque sa tranche risque de venir en appui contre le plateau transparent avant que sa face arrière ne s'appuie sur le trépied.

On connaît par ailleurs du document FR2861005 un mors de serrage d'une lentille ophtalmique pouvant être utilisé comme trépieds de support d'une lentille ophtalmique.

Ce mors de serrage comporte trois longs bras montés mobiles en rotation sur le support autour de trois axes de rotation parallèles.

L'inconvénient majeur de ce mors de serrage est que ses bras, dont les longueurs sont importantes, cachent une grande partie de la lentille. Il se peut alors qu'ils occultent les marques de centrage de la lentille, au risque que l'appareil centreur-bloqueur ne puisse plus centrer la lentille.

### OBJET DE L'INVENTION

Afin de remédier aux inconvénients précités de l'état de la technique, la présente invention propose un support de lentille qui facilite l'opération de centrage de la lentille et qui assure un meilleur maintien de cette lentille.

Plus particulièrement, on propose selon l'invention un support tel que défini dans l'introduction, dans lequel l'extrémité libre dudit plot est située à une distance de l'axe de rotation de ce plot qui est comprise entre 5 et 25 millimètres.

La mobilité de ce plot permet ainsi de faire varier la taille du trépied, entre une taille réduite pour accueillir les lentilles déjà détourées et une taille importante pour accueillir les lentilles cambrées et de grandes dimensions.

Le montage de chaque plot sur le plateau permet alors de réduire la taille de ce plot de manière à ce que ce dernier soit peu visible par l'appareil centreur-bloqueur et qu'il n'occulte donc pas les marques de centrage prévues sur la lentille.

Préférentiellement, ledit plot est monté mobile en rotation sur le plateau autour d'un axe de rotation qui est situé à distance de l'extrémité libre de ce plot.

Le montage à rotation du plot sur le plateau permet de prévoir une liaison simple et rigide, permettant au support de parfaitement accomplir sa fonction de maintien de la lentille en position fixe, quelle que soit la géométrie de celle-ci.

D'autres caractéristiques avantageuses et non limitatives du support conforme à l'invention sont les suivantes :
- les trois plots sont montés mobiles en rotation sur le plateau autour de trois axes de rotation distincts ;
- ledit plot est libre de pivoter sur une révolution complète autour de son axe de rotation ;
- ledit plot comporte un doigt en forme de tige et un socle auquel est fixé le doigt et qui est monté mobile en rotation sur le plateau ;
- ledit socle présente une forme allongée, avec une première extrémité à partir de laquelle s'élève ledit doigt et une seconde extrémité équipée de moyens de montage à rotation sur le plateau ;
- ledit socle présente une forme de disque transparent, et est monté dans un logement circulaire correspondant du plateau ;
- ledit plateau est transparent ;
- ledit plateau présente une face plane, qui réfléchit la lumière ;
- il est prévu des moyens d'indexation dudit plot, pour bloquer la rotation dudit plot sur le plateau.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un appareil centreur-bloqueur équipé d'un support selon l'invention ;
- les figures 2 et 3 sont des vues schématiques en plan de deux variantes de réalisation des moyens de centrage de l'appareil centreur-bloqueur de la figure 1 ;
- les figures 4 et 5 sont des vues schématiques en perspective du support de la figure 1, sur lesquelles les ergots présentent des positions différentes ;
- la figure 6 est une vue schématique en coupe du support de la figure 1 et d'une lentille ophtalmique qui repose sur ce support ;
- la figure 7 est une vue schématique de dessus d'une variante de réalisation du support de la figure 1 ; et
- la figure 8 est une vue en coupe selon le plan A-A de la figure 7.

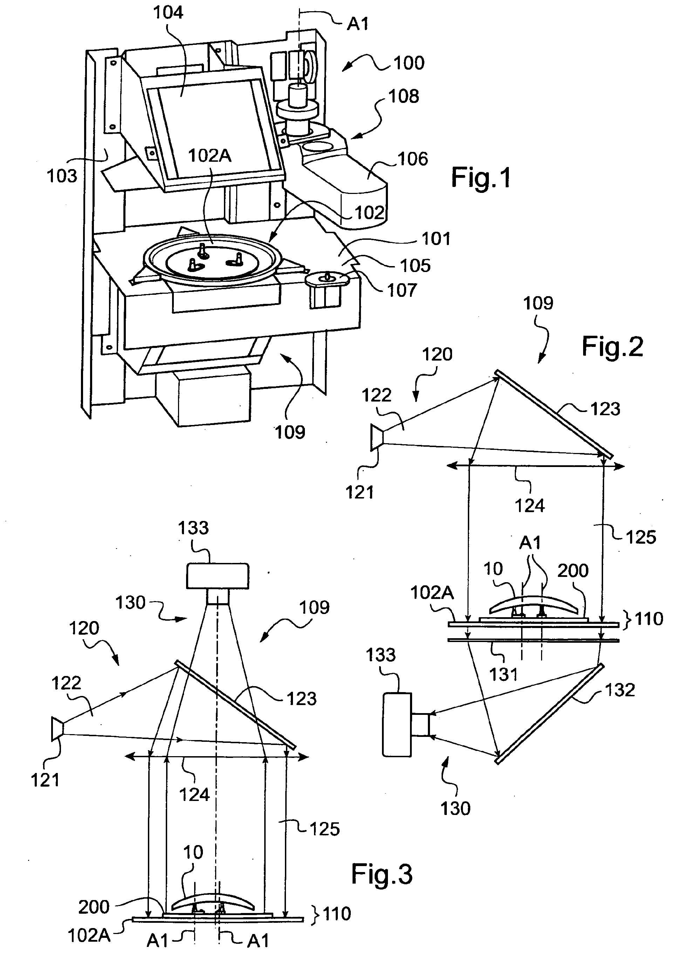

Sur la figure 1, on a représenté un appareil centreur-bloqueur 100.

Un tel appareil est généralement utilisé par un opticien après qu'il a acquis les formes des contours des entourages d'une monture de lunettes sélectionnée par son client.

Cet appareil est alors employé pour opérer des opérations de centrage et de blocage d'une lentille ophtalmique à monter sur cette monture de lunettes.

L'objectif de l'opération de centrage est de repérer le référentiel de la lentille ophtalmique, et de déterminer la position que doit occuper le contour de l'entourage dans ce référentiel afin que la lentille, une fois détourée suivant ce contour puis montée sur la monture de lunettes, se retrouve convenablement centrée en regard de l'oeil correspondant de l'individu.

L'objectif de l'opération de blocage est de déposer un accessoire (dit « accessoire de blocage ») sur la lentille ophtalmique qui puisse permettre, d'une part, de faciliter la saisie de la lentille afin de la transporter depuis l'appareil centreur-bloqueur 100 jusqu'à un appareil de détourage, et, d'autre part, de fournir un repère stable permettant d'indiquer la position du référentiel de la lentille à l'issue de son transport.

L'appareil centreur-bloqueur 100 comporte à cet effet :
- un bâti 103,
- un pupitre de travail 101 fixé au bâti 103 dans un plan horizontal,
- un écran de visualisation 104 fixé sur le bâti 103 et orienté de telle sorte qu'il est visible par l'opticien travaillant au pupitre de travail 101,
- des moyens de centrage 109 de la lentille, fixés au bâti 103, et
- des moyens de blocage 108 pour déposer un accessoire de blocage sur la lentille, qui sont montés mobiles sur le bâti 103.

Le pupitre de travail 101 comporte un plateau horizontal 105 qui s'ouvre sur une zone de chargement 102 d'une lentille ophtalmique.

Cette zone de chargement 102 comporte en l'espèce une plaque d'appui 102A transparente et plane, qui obture une ouverture circulaire prévue dans le plateau horizontal 105.

Les moyens de blocage 108 comportent pour leur part un bras de manoeuvre 106 adapté à saisir un organe de blocage préalablement disposé sur un réceptacle 107 et à venir le déposer en un emplacement déterminé sur la face avant d'une lentille ophtalmique.

Ce bras de manoeuvre 106 peut être semi-motorisé, auquel cas il comportera une unique mobilité en translation pour monter ou descendre vers la zone de chargement 102, ou être auto-motorisé, auquel cas il comportera trois mobilités.

Tel que représenté sur la figure 1, le bras de manoeuvre 106 est auto-motorisé. Il présente alors une mobilité en translation suivant un axe A1 pour monter ou descendre vers la zone de chargement 102, une mobilité en rotation autour de cet axe A1 pour s'écarter ou se rapprocher de la zone de chargement 102, et une mobilité en translation radiale par rapport à cet axe A1.

Les moyens de centrage 109 de la lentille ophtalmique sont quant à eux conçus pour déterminer la position du référentiel de la lentille ophtalmique, en epérant la position et l'orientation de différentes marques de centrage peintes sur la face avant de la lentille ophtalmique.

Comme le montre la figure 2, ces moyens de centrage 109 comportent des moyens d'accueil 110 de la lentille ophtalmique 10 et, de part et d'autre de ces moyens d'accueil 110, des moyens d'éclairement 120 de la lentille ophtalmique 10 et des moyens d'acquisition et d'analyse 130 de la lumière transmise au travers de la lentille ophtalmique 10.

Les moyens d'accueil 110 comportent, outre la plaque d'appui 102A précitée, un support 200 qui fait plus précisément ici l'objet de la présente invention et qui sera décrit en détail dans la suite de cet exposé.

Les moyens d'éclairement 120 comprennent une source de lumière 121 qui émet un faisceau lumineux divergent 122, un miroir 123 incliné à 45° qui réfléchit ce faisceau lumineux divergent 122, et une lentille convergente 124 adaptée à former un flux lumineux 125 à rayons parallèles en direction du support 200.

Les moyens d'acquisition et d'analyse 130 comprennent quant à eux une plaque dépolie 131 formant écran, un miroir 132 incliné à 45° pour renvoyer l'image formée sur l'écran, et une caméra numérique 133 pour acquérir cette image. Ainsi la caméra est-elle adaptée à acquérir une image de la lentille ophtalmique 10, sur laquelle apparaissent son contour et ses marques de centrage.

Sur la figure 3, on a représenté une variante de réalisation de ces moyens de centrage 109.

Dans cette variante, les moyens d'éclairement 120 et les moyens d'acquisition et d'analyse 130 sont situés sur un même côté par rapport aux moyens d'accueil 110.

Pour cela, le miroir 123 des moyens d'éclairement 120 est un miroir semi-réfléchissant 123 et les moyens d'acquisition et d'analyse 130 comprennent uniquement une caméra 133 située derrière ce miroir 123.

Quelle que soit l'architecture de l'appareil centreur-bloqueur 1, le support 200 est agencé pour s'appuyer sur la plaque d'appui 102A du pupitre de travail 101 et pour supporter la lentille ophtalmique 10.

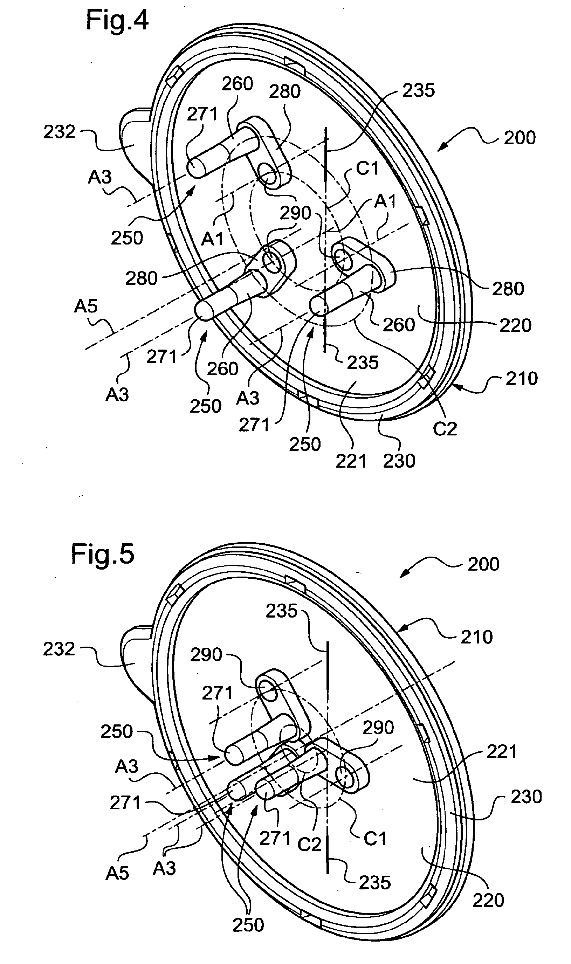

Sur les figures 4 à 6 et 7 à 8, on a représenté deux modes de réalisation de ce support 200 ; 300.

Tel que représenté sur ces figures, le support 200 300 comporte, d'une part, un plateau 210 ; 310 agencé pour s'appuyer sur la plaque d'appui 102A du pupitre de travail 101, et, d'autre part, trois plots 250 ; 350 qui s'élèvent à partir du plateau 210 ; 310 pour présenter des extrémités libres 271 ; 371 par lesquelles ils sont adaptés à porter la lentille ophtalmique 10.

Les trois plots 250 ; 350 forment ainsi un trépied sur lequel la lentille ophtalmique 10 peut reposer par sa face optique arrière lors des opérations de centrage et de blocage.

Selon une caractéristique particulièrement avantageuse de l'invention, l'un au moins des trois plots 250 ; 350 est monté mobile sur le plateau 210.

Ainsi est-il possible d'ajuster la distance entre les extrémités libres 271 ; 371 des plots 250 ; 350 en fonction notamment des dimensions et de la courbure de la lentille ophtalmique 10.

Dans les deux modes de réalisation du support représentés, les trois plots 250 ; 350 sont montés mobiles sur le plateau 210 ; 310.

Ils sont plus précisément montés mobile en rotation sur le plateau 210 ; 310 autour de trois axes de rotation A1 ; A2 qui sont parallèles, distincts et équidistants.

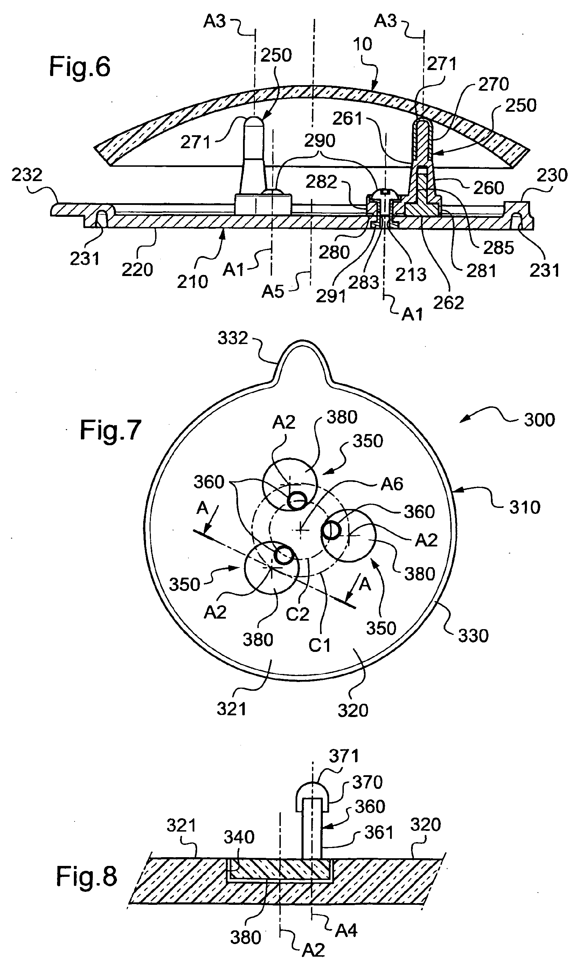

Comme le montrent les figures 4 et 7, le cercle C1 circonscrit aux trois axes de rotation A1 ; A2 présente un diamètre ici égal à 30 millimètres. L'extrémité libre 271 ; 371 de chaque plot 250 ; 350 est par ailleurs située à une distance de l'axe de rotation A1 ; A2 de ce plot 250 ; 350 qui est égale à 15 millimètres.

Par conséquent, le cercle C2 circonscrit aux extrémités libres 271 ; 371 des trois plots 250 ; 350 présente, selon la position angulaire des plots autour de leurs axes de rotation A1 ; A2, un diamètre compris entre 15 et 45 millimètres.

De cette manière, le trépied formé par les plots du support 200 ; 300 présente une taille variable, qui peut être ajustée pour accueillir de manière stable des lentilles aux dimensions réduites ou des lentilles aux cambrures importantes.

Dans les deux modes de réalisation du support 200 ; 300 représenté sur les figures 4 à 6 et 7 à 8, le plateau 210 ; 310 comporte une paroi plane 220 ; 320, transparente et rigide, en forme de disque d'axe principal A5 ; A6.

Dans ces deux modes, les axes de rotation A1 ; A2 des plots 250 ; 350 sont parallèles à cet axe principal A5 ; A6.

Chaque plot 250 ; 350 comporte par ailleurs un doigt 260 ; 360 en forme le tige allongée suivant un axe A3 ; A4, et un socle 280 ; 380 auquel est fixé le doigt 260 ; 360 et qui est monté mobile en rotation sur le plateau 210 ; 310.

Dans le premier mode de réalisation du support 200 représenté sur les figures 4 à 6, le socle 280 est réalisé dans une matière opaque et présente une forme allongée, avec une première extrémité 281 (figure 6) à partir de laquelle s'élève le doigt 260 et une seconde extrémité 282 montée à rotation sur le plateau 210.

Grâce à sa forme allongée, le socle 280 présente une largeur réduite. Par conséquent, même si les plots 250 sont situés dans le champ de l'image de la lentille acquise par les moyens de centrage de l'appareil centreur-bloqueur 100, la probabilité qu'ils cachent les marques de centrage peintes sur la lentille ophtalmique 10 est réduite.

Le socle 280 présente plus précisément ici, vu de dessous par la caméra 133, une forme oblongue, avec une première extrémité 281 arrondie autour de l'axe A3, et une seconde extrémité 282 arrondie autour de l'axe de rotation A1.

Comme le montre la figure 6, pour permettre au socle 280 de pivoter sur le plateau 210, le socle 280 et le plateau 210 sont percés de deux alésages traversant 283, 213 situés dans le prolongement l'un de l'autre et centrés sur l'axe de rotation A1.

Un axe 291 tubulaire est engagé en force au travers de l'alésage traversant 213 du plateau 210, de manière à être fixé sur celui-ci. Cet axe 291 est en revanche monté avec du jeu dans l'alésage traversant 283 du socle 280 du plot 250 de manière à permettre à celui-ci de pivoter sur une révolution complète autour de l'axe de rotation A1.

Pour maintenir le socle 280 en appui contre la face avant 221 du plateau 210, une vis de blocage 290 est vissée par l'avant dans cet axe 291, de telle sorte que sa tête vienne légèrement en appui contre le socle 280.

Le doigt 260 présente quant à lui une forme de cône tronqué, d'axe de révolution A3 parallèle à l'axe de rotation A1, et dont l'extrémité libre 271 est arrondie pour éviter qu'elle ne raye la lentille.

Comme le montre plus précisément la figure 6, le doigt 260 présente plus précisément un corps métallique 261, qui vient de formation avec le socle 280 et qui est revêtu, sur son extrémité libre, d'un capuchon 270 en caoutchouc pour éviter de rayer la lentille.

Le corps métallique 261 présente par ailleurs, en creux dans sa face arrière, une cavité 285 qui loge un patin glissant 262 par lequel le plot 250 s'appuie sur la face avant 221 de la paroi plane 220 du plateau 210. Ainsi, grâce à ce patin glissant 262, l'opticien peut aisément faire pivoter chaque plot 250 autour de son axe de rotation A1, sans détériorer le plateau 220.

Dans le second mode de réalisation du support 300 représenté sur les figures 7 et 8, le socle 380 présente une forme de disque épais et transparent, et est monté dans un logement circulaire 340 du plateau 310. Le socle 380 et le plateau 310 sont alors préférentiellement réalisés dans le même matériau (en plexiglass ou en polycarbonate).

Ainsi, quel que soit le diamètre du socle 380, ce dernier reste invisible sur l'image de la lentille acquise par les moyens de centrage de l'appareil centreur-bloqueur 100. Il ne cache donc jamais les marques de centrage peintes sur la lentille.

Le socle 380 présente plus précisément ici une forme de disque d'épaisseur égale à la moitié de l'épaisseur de la paroi plane 320 du plateau 310, et le logement circulaire 340 prévu en creux dans la face avant 321 de la paroi plane 320 du plateau 310 présente une forme complémentaire de celle du socle 380, qui est donc cylindrique de révolution autour de l'axe de rotation A2.

Ainsi le socle 380 peut-il pivoter librement dans son logement circulaire 340 autour de l'axe de rotation A2.

Comme le montre plus précisément la figure 8, le doigt 360 comporte quant à lui une tige 361 cylindrique de révolution autour d'un axe de révolution A4 parallèle à l'axe de rotation A1, et un capuchon 370 en caoutchouc qui est fixé sur l'extrémité libre de la tige 361, pour éviter qu'elle ne raye la lentille.

La tige 361 vient ici de formation avec le socle 380.

Dans les deux modes de réalisation du support 200 ; 300 représentés sur les figures, le plateau 210 ; 310 comporte des moyens d'axage qui permettent de faciliter le positionnement du support 200 ; 300 sur la plaque d'appui 102A du pupitre de travail 101 de l'appareil centreur-bloqueur 1.

Le plateau 210 ; 310 comporte à cet effet, sur toute la périphérie de sa paroi plane 220 ; 320, un bourrelet 230 ; 330 qui forme un rebord autour de la face avant de cette paroi plane 220 ; 320.

Les moyens d'axage comportent alors huit cavités 231 (figure 6) qui s'étendent en creux dans la face arrière de ce bourrelet 230 ; 330 et qui sont régulièrement réparties autour de l'axe principal A5 ; A6.

Les moyens d'axage comportent également une languette 232 ; 332 qui fait saillie du contour circulaire du bourrelet 230 ; 330, radialement par rapport à l'axe principal A5 ; A6. Cette languette 232 ; 332 forme ainsi un détrompeur permettant de repérer l'orientation du plateau 210; 310 autour de son axe principal A5 ; A6.

La mise en place du support 200 sur la plaque d'appui 102A du pupitre de travail 101 de l'appareil centreur-bloqueur 1 consiste alors à rapporter le plateau 210 sur cette plaque d'appui 102A de telle manière que, d'une part, ses cavités 231 s'engagent sur des ergots prévus en correspondance sur la plaque d'appui 102A, et que, d'autre part, sa languette 232 ; 332 s'engage dans un logement prévu en correspondance sur la plaque d'appui 102A.

Ainsi l'opticien peut-il s'assurer que le support 200 ; 300 est correctement positionné dans l'appareil centreur-bloqueur 100.

La forme des ergots prévus en saillie sur la plaque d'appui 102A est ici prévue de telle manière que le support 200 ; 300, une fois mis en place sur la plaque d'appui 102A, est bloqué sur celle-ci. De cette manière, la lentille ophtalmique 10 posée sur le support 200 ; 300 est correctement maintenue en place par rapport au bâti 103 de l'appareil centreur-bloqueur 100 lorsque le bras de manoeuvre 106 pose l'accessoire de blocage sur sa face avant.

En variante, dans le cas où le bras de manoeuvre 106 de l'appareil centreur-bloqueur 100 est non pas auto-motorisé mais semi-motorisé, on pourra prévoir que le support soit dépourvu de moyens d'axage.

En effet, dans ce cas, le bras de manoeuvre 106 est seulement adapté à monter ou descendre, si bien que l'opticien doit positionner manuellement le plateau sous le bras de manoeuvre, en le faisant coulisser sur la plaque d'appui du pupitre de travail. Le plateau devra donc pouvoir coulisser librement sur cette plaque d'appui.

Dans cette variante, comme cela apparait d'ailleurs sur les figures 4 et 5, on pourra prévoir que deux traits d'orientation 235 soient peints sur la face avant 221 de la paroi plane 220 du plateau 210, pour faciliter le repérage de ce plateau.

Dans le mode de réalisation du support 200 ; 300 représenté sur les figures, le plateau 210 ; 310 est transparent, pour permettre à la caméra 133 des moyens de centrage représentés sur la figure 2 d'acquérir une image de la lentille ophtalmique 10.

Dans la variante représentée sur la figure 3, où la caméra 133 et la source de lumière 121 sont placées du même côté par rapport au support 200, on pourra prévoir que la face avant 221 ; 321 ou la face arrière de la paroi plane 220 ; 320 du plateau 210 ; 310 du support 200 ; 300 soit réfléchissante, pour permettre à la caméra 133 d'acquérir un cliché de l'image de la lentille qui se reflète sur cette paroi plane.

La présente invention n'est nullement limitée aux modes de réalisation décrits et représentés, mais l'homme du métier saura y apporter toute variante conforme à son esprit.

On pourra notamment prévoir que l'axe de rotation de chaque plot s'étende, non pas perpendiculairement à la paroi plane du plateau, mais suivant un axe incliné par rapport à celle-ci.

Le plot pourra ainsi être incliné sur le plateau de manière que la taille de son image, sur l'image acquise par la caméra, sera réduite.

Selon une variante du support représenté sur les figures 4 à 6, on pourra prévoir que le doigt de chaque plot s'étende, non pas parallèlement à l'axe de rotation de ce plot, mais selon un axe incliné par rapport à cet axe de rotation.

De cette manière, on pourra prévoir pour chaque plot un socle de longueur réduite.

Encore en variante, on pourra prévoir des moyens électromagnétiques pour commander la position angulaire des plots, de manière que l'opticien ne soit pas forcé d'ajuster manuellement la position angulaire des plots sur le plateau. On pourrait ainsi prévoir d'équiper le socle de chaque plot du support d'un aimant, et d'équiper le pupitre de travail de l'appareil centreur-bloqueur de moyens de pilotage de la position de ces aimants.

De cette manière, la position angulaire des plots pourrait être ajustée à distance.

Selon une autre variante de l'invention, on pourra prévoir que deux des trois plots soient fixés au plateau et que le troisième plot soit monté mobile en translation dans une rainure ou sur une nervure du plateau, de longueur comprise entre 5 et 30 millimètres.

De cette manière, la taille de l'image du plot, sur l'image acquise par la caméra, sera minime. La taille de l'image de la nervure ou de la rainure, sur l'image acquise par la caméra, sera également réduite.

Selon une autre variante de l'invention non représentée sur les figures, on pourra prévoir des moyens d'indexation (ou de crantage) de chacun des plots qui est monté à rotation sur le plateau, pour bloquer la rotation de ces plots dans une ou plusieurs positions angulaires autour de leur axe de rotation.

On pourra notamment prévoir qu'ils permettent de bloquer chaque plot dans 6 positions angulaires écartées deux à deux de 60 degrés autour de son axe de rotation.

Typiquement, ces moyens d'indexation pourront se présenter sous la forme de six ergots en saillie du plateau, régulièrement répartis autour de l'axe de rotation du plot considéré, et adaptés à coopérer avec un creux prévu en correspondance à la base du plot.

Ces moyens de crantage pourront également être formés six pans régulièrement répartis sur la face latérale de la vis qui relie le plot au plateau, chacun de ces pans permettant de former arrêtoir.

## Revendications

1. Support (200) de lentille ophtalmique (10), comportant :
- un plateau (210), et
- trois plots (250) qui sont montés sur le plateau (210), qui s'élèvent à partir de celui-ci pour présenter des extrémités libres (271) par lesquelles ils sont adaptés à porter la lentille ophtalmique (10), et dont l'un au moins d'entre eux est monté mobile en rotation sur le plateau (210) autour d'un axe de rotation (A1),
**caractérisé en ce que** l'extrémité libre (271) dudit plot (250) est située à une distance de l'axe de rotation (A1) de ce plot (250) qui est comprise entre 5 et 25 millimètres.

2. Support (200) selon la revendication précédente, dans lequel les trois plots (250) sont montés mobiles en rotation sur le plateau (210) autour de trois axes de rotation (A1) distincts.

3. Support (200) selon l'une des revendications précédentes, dans lequel ledit plot (250) est libre de pivoter sur une révolution complète autour de son axe de rotation (A1).

4. Support (200) selon l'une des revendications précédentes, dans lequel ledit plot (250) comporte un doigt (260) en forme de tige et un socle (280) auquel est fixé le doigt (260) et qui est monté mobile en rotation sur le plateau (210).

5. Support (200) selon la revendication 4, dans lequel ledit socle (280) présente une forme allongée, avec une première extrémité (281) à partir de laquelle s'élève ledit doigt (260) et une seconde extrémité (282) équipée de moyens de montage à rotation (283) sur le plateau (210).

6. Support (200) selon la revendication 4, dans lequel ledit socle (380) présente une forme de disque transparent, et est monté dans un logement circulaire (340) correspondant du plateau (310).

7. Support (200) selon l'une des revendications 1 à 6, dans lequel ledit plateau (210) est transparent.

8. Support (200) selon l'une des revendications 1 à 6, dans lequel ledit plateau (210) présente une face plane, qui réfléchit la lumière.

9. Support (200) selon l'une des revendications 1 à 8, dans lequel il est prévu des moyens d'indexation dudit plot, pour bloquer la rotation dudit plot sur le plateau.

## Patentansprüche

1. Träger (200) für ophthalmische Linse (10), der Folgendes umfasst:
- eine Platte (210) und
- drei Höcker (250), die auf der Platte (210) montiert sind und sich von dieser erheben, um freie Enden (271) zu bilden, durch die sie in der Lage sind, die ophthalmische Linse (10) zu tragen, und von denen wenigstens einer auf der Platte (210) drehbar um eine Drehachse (A1) montiert ist,
**dadurch gekennzeichnet, dass** sich das freie Ende (271) des Höckers (250) in einem Abstand von der Drehachse (A1) dieses Höckers (250) befindet, der im Bereich von 5 bis 25 Millimetern liegt.

2. Träger (200) nach dem vorhergehenden Anspruch, wobei die drei Höcker (250) auf der Platte (210) drehbar um drei verschiedene Drehachsen (A1) montiert sind.

3. Träger (200) nach einem der vorhergehenden Ansprüche, wobei der Höcker (250) um eine vollständige Umdrehung um seine Drehachse (A1) frei schwenken kann.

4. Träger (200) nach einem der vorhergehenden Ansprüche, wobei der Höcker (250) einen Zapfen (260) in Form eines Stifts und einen Sockel (280), an dem der Zapfen (260) befestigt ist und der drehbar auf der Platte (210) montiert ist, umfasst.

5. Träger (200) nach Anspruch 4, wobei der Sockel (280) eine längliche Form aufweist und ein erstes Ende (281), von dem sich der, Zapfen (260) erhebt, und ein zweites Ende (282), das mit Mitteln (283) für die Drehmontage auf der Platte (210) ausgestattet ist, besitzt.

6. Träger (200) nach Anspruch 4, wobei der Sockel (380) die Form einer lichtdurchlässigen Scheibe besitzt und in einem kreisförmigen Aufnahmeraum (340), der der Platte (310) entspricht, montiert ist.

7. Träger (200) nach einem der Ansprüche 1 bis 6, wobei die Platte (210) lichtdurchlässig ist.

8. Träger (200) nach einem der Ansprüche 1 bis 6, wobei die Platte (210) eine ebene Fläche aufweist, die Licht reflektiert.

9. Träger (200) nach einem der Ansprüche 1 bis 8, in dem Mittel für die Indexierung des Höckers vorgesehen sind, um die Drehung des Höckers auf der Platte zu blockieren.

## Claims

1. A holder (200) for an ophthalmic lens (10), comprising:
- a plate (210), and
- three studs (250) which are mounted on the plate (210), which project from the latter so as to have free ends (271) by way of which they are designed to support the ophthalmic lens (10), and at least one of which is mounted so as to be able to rotate on the plate (210) about a rotation axis (A1),
**characterized in that** the free end (271) of said stud (250) is located at a distance of between 5 and 25 millimeters from the rotation axis (A1) of this stud (250).

2. The holder (200) as claimed in the preceding claim, in which the three studs (250) are mounted so as to be able to rotate on the plate (210) about three separate rotation axes (A1).

3. The holder (200) as claimed in either of the preceding claims, in which said stud (250) is free to pivot through one complete revolution about its rotation axis (A1).

4. The holder (200) as claimed in one of the preceding claims, in which said stud (250) comprises a finger (260) in the form of a stem and a base (280) to which the finger (260) is fixed and which is mounted so as to be able to rotate on the plate (210).

5. The holder (200) as claimed in claim 4, in which said base (280) has an elongate shape, with a first end (281) from which said finger (260) projects and a second end (282) furnished with means (283) for rotational mounting on the plate (210).

6. The holder (200) as claimed in claim 4, in which said base (380) is in the form of a transparent disk and is mounted in a corresponding circular housing (340) in the plate (310).

7. The holder (200) as claimed in one of claims 1 to 6, in which said plate (210) is transparent.

8. The holder (200) as claimed in one of claims 1 to 6, in which said plate (210) has a planar face which reflects light.

9. The holder (200) as claimed in one of claims 1 to 8, in which indexing means for said stud are provided, in order to block the rotation of said stud on the plate.
